# EUROPEAN PATENT APPLICATION

(11) **EP 4 631 720 A1**
(43) Date of publication of application: **15.10.2025**
(21) Application number: 24741330.5
(22) Date of filing: 11.01.2024
(51) Int. Cl.: B32B 17/10

(54) **LAMINATED GLASS, VEHICLE WINDOW GLASS, AND VEHICLE**

(30) Priority: 13.01.2023 CN 202310065227
(71) Applicant: Fuyao Glass Industry Group Co., Ltd., Fuqing, Fujian 350300 (CN)
(72) Inventor: CHEN, An, Fujian 350300 (CN); WU, Shenggui, Fujian 350300 (CN); WANG, Li, Fujian 350300 (CN)
(74) Representative: Patentanwälte Olbricht Buchhold Keulertz
(86) International application number: PCT/CN2024/071842
(87) International publication number: WO 2024/149334

(57) **Abstract**

A laminated glass, a vehicle window glass, and a vehicle, includes a first glass sheet (1) and a second glass sheet (2) which are arranged in a stacked configuration, an adhesive layer disposed between the first glass sheet (1) and the second glass sheet (2), the laminated glass having a sealing end portion which is capable of being fitted with a sealing member, the sealing end portion including a first end face (14) located at an end portion (11) of the first glass sheet (1) and a second end face (24) located at an end portion (21) of the second glass sheet (2); and the first end face (14) extends outward relative to the second end face (24) along an extension direction of the laminated glass to form an overlap difference, which is greater than 0.5 mm and less than 3 mm; the second end face (24) includes an outer arc-shaped end face (241) and an inner arc-shaped end face (242) which are symmetrically disposed and each have an arc angle not exceed 90°. The present disclosure can reduce a compressive force between the laminated glass and the sealing member, avoid the problem that the excessive compressive force between the laminated glass and the sealing member easily causes wear on sealing member, shortening its service life. Additionally, this design improves the stability and the smooth movement of the laminated glass, avoiding the occurrence of unwanted sliding noise and improves the Noise, Vibration, and Harshness (NVH) performance of the vehicle.

## Description

### RELATED APPLICATION

The present disclosure claims priority to Chinese Patent Application NO. 202310065227.3 and filed on January 13, 2023, which is hereby incorporated by reference in its entirety.

### TECHNICAL FIELD

The present disclosure relates to the technical field of the glass, and particularly to laminated glass and vehicle door glass.

The present disclosure further relates to the technical field of traffic vehicles, and particularly to a vehicle.

### BACKGROUND

The laminated glass is widely used in the window glass of vehicles or buildings due to its superior safety performance, as fragments do not scatter upon breakage. As an end portion of the laminated glass needs to be fitted with a sealing member such as a sealing strip, the end portion extrudes the sealing member. When the laminated glass needs to slide, for example, in vertically adjustable the vehicle door glass, there is a friction force between the end portion and the sealing member in addition to a compressive force, which not only easily wears on the sealing strip to shorten the service life thereof, but also affects the stability of the laminated glass.

### SUMMARY

The present disclosure aims to provide a laminated glass and vehicle door glass, to solve the technical problems that the excessive compressive force between the end portion of the laminated glass and the sealing member causes wear on sealing strip, shortening its service life, and reducing the stability of the laminated glass.

The above objective of the present disclosure can be achieved by adopting the following technical solutions.

The present disclosure provides a laminated glass, including a first glass sheet and a second glass sheet which are arranged in a stacked configuration, an adhesive layer disposed between the first glass sheet and the second glass sheet, the laminated glass having a sealing end portion which is capable of being fitted with a sealing member, the sealing end portion including a first end face located at an end portion of the first glass sheet and a second end face located at an end portion of the second glass sheet; and the first end face extends outward relative to the second end face along an extension direction of the laminated glass to form an overlap difference, and the overlap difference is greater than 0.5 mm and less than 3 mm; the second end face includes two arc-shaped end faces which are symmetrically disposed and each have an arc angle not exceed 90°.

In an embodiment of the present disclosure, the first end face is a semicircular end face, and the two arc-shaped end faces of the second end face each have an arc angle of 90° and are connected to form a semicircular end face.

In an embodiment of the present disclosure, a tangent line exists between the first end face and the second end face, a vertical distance A between a tangent point on the tangent line of the first end face and a closest point on the second end face to the tangent point is 0.4 mm to 2.4 mm, and a vertical distance B between an intersection point of the tangent line with an extension line of an outer side face of the second glass sheet and the tangent point is 0.5 mm to 2.8 mm.

In an embodiment of the present disclosure, the vertical distance A is in a range of 1.1 mm to 1.47 mm, and the vertical distance B is in a range of 1.29 mm to 1.72 mm.

In an embodiment of the present disclosure, the vertical distance A is in a range of 1.6 mm to 2 mm, and the vertical distance B is in a range of 1. 9 mm to 2.32 mm.

In an embodiment of the present disclosure, the tangent line intersects with the extension line to form an included angle ∠C, and the radius of the arc-shaped end face is R, and ∠C =2 × arctan(R/( R-(B-A))).

In an embodiment of the present disclosure, the included angle ranges from 110° to 140°.

In an embodiment of the present disclosure, the included angle ranges from 113.6° to 122.8°.

In an embodiment of the present disclosure, the included angle ranges from 130.9° to 134.6°.

In an embodiment of the present disclosure, the thickness of the second glass sheet is smaller than that of the first glass sheet, and the first glass sheet is disposed toward a side of the laminated glass with a larger external load.

In an embodiment of the present disclosure, the thickness of the first glass sheet is greater than 3.2 mm, and the thickness of the second glass sheet is less than 1.4 mm.

In an embodiment of the present disclosure, a tangent line between the first end face and the second end face forms a defined boundary; and an end edge of the adhesive layer does not extend beyond the defined boundary.

The present disclosure further provides a vehicle window glass, which is made of the laminated glass described above.

The present disclosure further provides a vehicle, including the laminated glass described above.

The present disclosure has the following characteristics and advantages:

According to the laminated glass, the vehicle window glass and the vehicle of the present disclosure, by extending the first end face outward relative to the second end face to form an overlap difference, adjusting the overlap difference to be greater than 0.5 mm and less than 3mm, and symmetrically disposing two arc-shaped end faces on the second end face, the first end face and the second end face are fitted to form a better stress state between the laminated glass and the sealing member, and the compressive force between the laminated glass and the sealing member meets the design requirement, so as to avoid the problem that the excessive compressive force between the end portion of the laminated glass and the sealing member causes wear on sealing strip, shortening its service life,. Additionally, this design improves the stability and the smooth movement of the laminated glass, avoiding the occurrence of unwanted sliding noise and improves the Noise, Vibration, and Harshness (NVH) performance of the vehicle.

### BRIEF DESCRIPTION OF THE DRAWINGS

In order to more clearly illustrate the technical solutions in the embodiments of the present disclosure, the drawings required in the description of the embodiments will be briefly introduced below. Obviously, the drawings involved in the following description only illustrate some embodiments of the present disclosure, and those of ordinary skill in the art can obtain other drawings from these drawings without paying any inventive effort.
FIG. 1 illustrates a structural diagram of a laminated glass of the present disclosure.
FIG. 2 illustrates a partially enlarged diagram of a laminated glass of the present disclosure.
FIG. 3 illustrates a schematic diagram of an included angle in laminated glass of the present disclosure (an adhesive layer is omitted).

In the drawings,
1: first glass sheet; 11: end portion; 12: outer side face; 13: inner side face; 14: first end face; 2: second glass sheet; 21: end portion; 22: outer side face; 23: inner side face; 24: second end face; 241: outer arc-shaped end face; 242: inner arc-shaped end face; 3: adhesive layer; 31: end portion; 32: end edge.

### DETAILED DESCRIPTION OF THE EMBODIMENTS

The technical solutions in the embodiments of the present disclosure will be clearly and completely described below with reference to the drawings for the embodiments of the present disclosure. Obviously, those described are only a part, rather than all, of the embodiments of the present disclosure. Based on the embodiments in the present disclosure, any other embodiment obtained by those of ordinary skill in the art without paying any inventive effort should fall within the protection scope of the present disclosure.

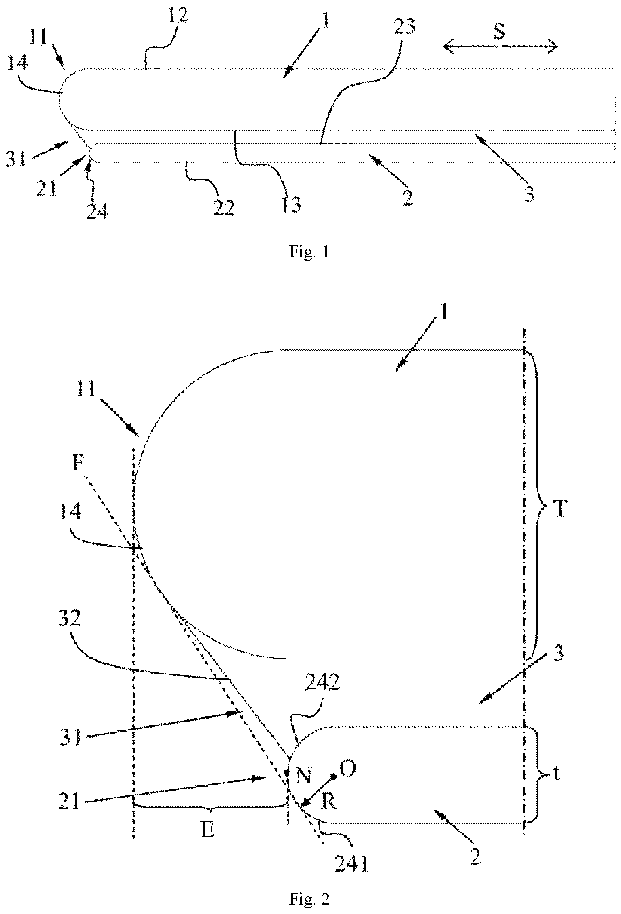

As illustrated in FIGS. 1 to 2, the present disclosure provides a laminated glass, including a first glass sheet 1 and a second glass sheet 2 which are arranged in a stacked configuration, an adhesive layer 3 disposed between the first glass sheet and the second glass sheet, the laminated glass having a sealing end portion which is capable of being fitted with a sealing member, the sealing end portion including a first end face 14 located at an end portion 11 of the first glass sheet 1 and a second end face 24 located at an end portion 21 of the second glass sheet 2; and the first end face 14 extends outward relative to the second end face 24 along an extension direction S of the laminated glass (i.e., a direction away from a center thereof) to form an overlap difference E, and the overlap difference is greater than 0.5 mm and less than 3 mm; the second end face 24 includes two arc-shaped end faces which are symmetrically disposed and each have an arc angle not exceed 90°.

In this embodiment, the two arc-shaped end faces include an outer arc-shaped end face 241 connected to the outer side face 22 of the second glass sheet 2, and an inner arc-shaped end face 242 connected to an inner side face 23 of the second glass sheet 2, respectively.

In the laminated glass of the present disclosure, by adjusting the overlap difference to be greater than 0.5 mm and less than 3mm, and symmetrically disposing two arc-shaped end faces on the second end face 24, the first end face 14 and the second end face 24 are fitted to form a better stress state between the laminated glass and the sealing member, and the compressive force between the laminated glass and the sealing member meets the design requirement, so as to avoid the problem that the excessive compressive force between the end portion of the laminated glass and the sealing member causes wear on sealing strip, shortening its service life,. Additionally, this design improves the stability and the smooth movement of the laminated glass, avoiding the occurrence of unwanted sliding noise and improves the NVH performance of the vehicle. In addition, since the compressive force is mainly reduced by the outer arc-shaped end face 241 fitted with the first end face 14, the present disclosure provides two symmetrical arc-shaped end faces, so that it is unnecessary to distinguish two side faces of the second glass sheet 2 during edge grinding processing and mounting, and the processing and mounting are simpler.

It is difficult to directly measure the compressive force between laminated glass and the sealing member, and during mounting, the laminated glass is fitted with the sealing member by overcoming the compressive force, which means that the compressive force between laminated glass and the sealing member decreases as the mounting force of the laminated glass decreases. Therefore, the mounting force of the laminated glass may be selected as an index to evaluate the improvement effect of the compressive force. For example, the vehicle window glass made of the laminated glass is inserted between two sealing strips on a vehicle window body along a vertical direction, so that front and rear ends of the vehicle window glass are in sealing sliding fit with the two sealing strips along the vertical direction.

In order to further illustrate the effect of adjusting the compressive force by adjusting the overlap difference in the present disclosure, the following table shows the comparison between the mounting forces of an exemplary embodiment of the present disclosure and two comparative examples, which have the same parameters except the overlap difference, and a comparative example without overlap difference, and the radius R of each of the inner arc-shaped end face 242 and the outer arc-shaped end face 241 is 0.55 mm.

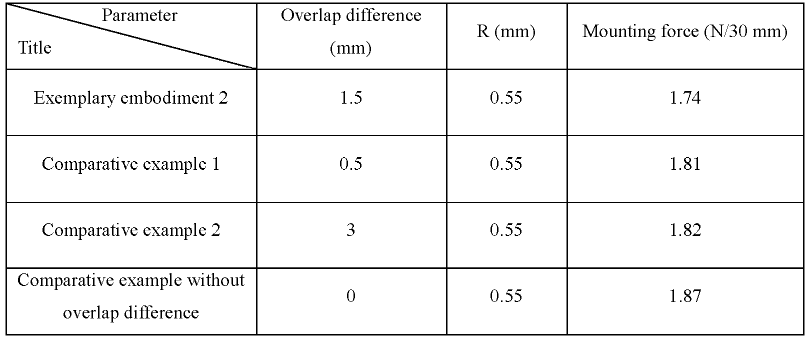

It can be seen that, compared with the cases where the overlap difference E is equal to 0.5 mm, equal to 3 mm and there is no overlap difference, i.e., the overlap difference E is outside the above range, when the overlap difference E is greater than 0.5 mm and less than 3 mm, the mounting force is greatly reduced, i.e., the effect of optimizing the compressive force is more obvious.

In an embodiment of the present disclosure, the outer arc-shaped end face 241 and the inner arc-shaped end face 242 each have an arc angle of 90° and are connected to form a semicircular end face, i.e., the radius of each of the outer arc-shaped end face 241 and the inner arc-shaped end face 242, i.e., the radius of the second end face 24, is equal to half the thickness t of the second glass sheet 2. By directly providing the second end face 24 as a semicircular end face, the processing is simpler, and the radius of the second end face 24 can be determined according to the thickness of the second glass sheet 2. In some other embodiments of the present disclosure, the arc angle of each of the outer arc-shaped end face 241 and the inner arc-shaped end face 242 is less than 90°. In still other embodiments of the present disclosure, the outer arc-shaped end face 241 and the inner arc-shaped end face 242 are connected by a flat end face extending straightly.

Similarly, in an embodiment of the present disclosure, the first end face 14 is also a semicircular end face, a radius of which is equal to half a thickness T of the first glass sheet 1. In one or more embodiments, the radius of the first end face 14 may be greater than or less than half of the thickness T of the first glass sheet 1, i.e., the size of the first glass sheet 1 may be the same as that of the glass sheet of the laminated glass in the related art without any adjustment. In some other feasible embodiments of the present disclosure, the first end face 14 may also be a polygonal end face with filleted transitions, such as an isosceles trapezoid.

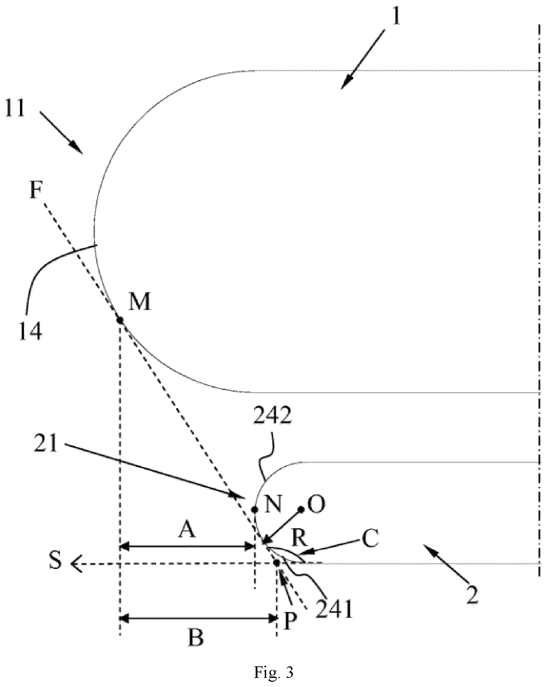

It is found in the present disclosure that when the laminated glass is in the following state by further adjusting the overlap difference E, the compressive force between the laminated glass and the sealing member can be better optimized. As illustrated in FIG. 3, in this state, a tangent line F exists between the first end face 14 and the second end face 24, and a vertical distance A between a tangent point M on the tangent line F of the first end face 14 and a closest point N on the second end face 24 to the tangent point ranges from 0.4 mm to 2.4 mm, and a vertical distance B between an intersection point of the tangent line F with an extension line S of an outer side face 22 of the second glass sheet 2 and a tangent point P is 0.5 mm to 2.8 mm.

The present disclosure provides a specific reference range of the vertical distance A as 1.1 mm to 1.47 mm, and a specific reference range of the vertical distance B as 1.29 mm to 1.72 mm.

The present disclosure provides another specific reference range of the vertical distance A as 1.6 mm to 2 mm, and another specific reference range of the vertical distance B as 1.9 mm to 2.32 mm.

When the laminated glass is in the following state by jointly adjusting the overlap difference E and the radius R of the second end face 24, or by adjusting the overlap difference E after the radius R of the second end face 24 is determined, the compressive force between the laminated glass and the sealing member can be better optimized. As illustrated in FIG. 3, the tangent line F intersects with the extension line K of the second glass sheet 2 (i.e., an extension direction S of the laminated glass) to form an included angle C, which is ∠C, then there is a relationship: LC=2 × arctan(R/( R-(B-A))). Because the vertical distance Ais related to the vertical distance B and the overlap difference E, the joint adjustment of the overlap difference E and the radius R can change the included angle C. That is, the present disclosure proposes to induce the included angle C according to the correlation between the compressive force and the overlap difference E and the radius R, and then optimize the compressive force to meet the requirements by controlling the included angle C.

The present disclosure provides an angle range of the included angle C as 110° to 140°. By selecting a value from the range as an angle value of the included angle C, compared with a value outside the range, the adjusted compressive force can be better optimized.

The present disclosure provides a specific reference range of the included angle C as 113.6° to 122.8°.

The present disclosure provides another specific reference range of the included angle C as 130.9° to 134.6°.

The following table shows the comparison between the structural parameters and the mounting forces between the laminated glass of six exemplary embodiments of the present disclosure, two comparative examples, and a comparative example without overlap difference, under the conditions that each radius R is 0.55 mm, i.e., the thickness t of each second glass sheet 2 is 1.1 mm, and the thicknesses of the first glass sheets are the same.

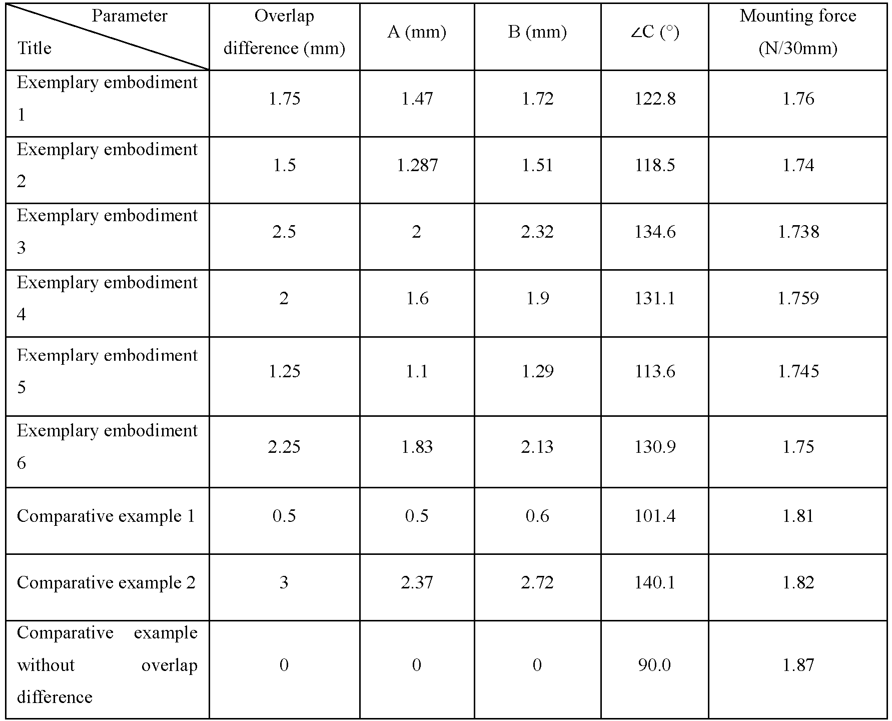

As can be seen from the above table, compared with the mounting force of the laminated glass of the comparative example without overlap difference, the mounting forces of the six exemplary embodiments of the present disclosure are greatly optimized. In addition, compared with the mounting force of the laminated glass of the comparative example without overlap difference, the mounting forces of the laminated glass of the two comparative examples are slightly optimized, which means that when the included angle C is smaller than 110° or greater than 140°, the compressive force is less optimized.

As illustrated in FIGS. 1 and 2, in order to realize the lighter laminated glass and reduce the manufacturing cost, in an embodiment of the present disclosure, the thickness t of the second glass sheet 2 is smaller than the thickness T of the first glass sheet 1. In the present disclosure, by adjusting the overlap difference E and the radius R of the second end face, a better stress state is formed between the laminated glass and the sealing member, and the stability and the strength of the laminated glass are improved, so that the stability and the strength of the laminated glass can still meet the requirements after the thickness t of the second glass sheet 2 is reduced. In an embodiment of the present disclosure, the thickness T of the first glass sheet 1 is greater than 3.2 mm, and is exemplarily 3.5 mm and 3.8 mm; and the thickness t of the second glass sheet 2 is less than 1.4 mm, and is exemplarily 1.1 mm.

In one or more embodiments, the thickness T of the first glass sheet 1 may be 1.6 mm to 5.0 mm; or in a range of 1.4 mm to about 3.85 mm, or in a range of about 1.4 mm to about 3.5 mm, or in a range of about 1.4 mm to about 3.0 mm, or in a range of about 1.4 mm to about 2.8 mm, or in a range of about 1.4 mm to about 2.5 mm, or in a range of about 1.4 mm to about 2.0 mm, or in a range of about 1.5 mm to about 3.85 mm, or in a range of about 1.5 mm to about 3.5 mm, or in a range of about 1.5 mm to about 3.0 mm, or in a range of about 1.5 mm to about 2.8 mm, or in a range of about 1.5 mm to about 2.5 mm, or in a range of about 1.5 mm to about 2.0 mm, or in a range of about 1.6 mm to about 3.85 mm, or in a range of about 1.6 mm to about 3.5 mm, or in a range of about 1.6 mm to about 3.0 mm, or in a range of about 1.6 mm to about 2.8 mm, or in a range of about 1.6 mm to about 2.5 mm, or in a range of about 1.6 mm to about 2.0 mm, or in a range of about 1.8 mm to about 3.5 mm, or in a range of about 2.0 mm to about 3.0 mm.

In one or more embodiments, the thickness t of the second glass sheet 2 may be in a range of 0.5 mm to 1.4 mm, or in a range of about 0.2 mm to about 1.4 mm, or in a range of about 0.3 mm to about 1.4 mm, or in a range of about 0.4 mm to about 1.4 mm, or in a range of about 0.5 mm to about 1.4 mm, or in a range of about 0.1 mm to about 1.1 mm, or in a range of about 0.2 mm to about 1.1 mm, or in a range of about 0.1 mm to about 0.7 mm, or in a range of about 0.2 mm to about 0.7 mm, or in a range of about 0.3 mm to about 0.7 mm, or in a range of about 0.4 mm to about 0.7 mm, or in a range of about 0.2 mm to about 0.6 mm, or in a range of about 0.3 mm to about 0.6 mm, or in a range of about 0.4 mm to about 0.6 mm, or in a range of about 0.2 mm to about 0.5 mm, or in a range of about 0.3 mm to about 0.5 mm, or in a range of about 0.2 mm to about 0.4 mm.

The extension direction S of the laminated glass in the present disclosure refers to an extension direction of a planar of the laminated glass opposite to the sealing member. The number of the sealing members fitted with the laminated glass may be one or more. Therefore, the number of the end portions 11 and the end portions 21 correspondingly disposed on the first glass sheet 1 and the second glass sheet 2 which are to be fitted with the sealing members may be one or more, respectively. For example, when a front end and a rear end of the vehicle window glass made of the laminated glass are in sealing sliding fit with a sealing strip respectively, the front end of the first glass sheet 1 extends a distance forward relative to the second glass sheet 2, and the rear end of the first glass sheet 1 extends a distance backward relative to the second glass sheet 2, so that the front and rear ends of the first glass sheet 1 and the front and rear ends of the second glass sheet 2 form overlap differences.

In order to ensure the stability of the laminated glass during service, in an embodiment of the present disclosure, the first glass sheet 1 with a greater thickness is disposed toward a side of the laminated glass with a larger external load. For example, in the side window glass made of the laminated glass, the first glass sheet 1 is disposed toward the exterior of the vehicle, and the second glass sheet 2 is disposed toward the interior of the vehicle, so that the first glass sheet 1 with a greater thickness and a higher strength can be used to bear a larger external load outside the vehicle, and the environment inside the vehicle is relatively stable, thereby reducing the impact of the external load on the second glass sheet 2.

In the first glass sheet 1 and the second glass sheet 2, side faces facing each other are an inner side face 13 of the first glass sheet 1 and an inner side face 23 of the second glass sheet 2 respectively, and side faces facing away each other are an outer side face 12 of the first glass sheet 1 and an outer side face 22 of the second glass sheet 2 respectively. The inner side face 13 of the first glass sheet 1 and the inner side face 23 of the second glass sheet 2 are bonded by an adhesive layer 3. The material of the adhesive layer 3 includes, but is not limited to, polyvinyl butyral (PVB), polycarbonate (PC), acoustic PVB, shade-band PVB, thermal control PVB, ethylene vinyl acetate (EVA), thermoplastic polyurethane (TPU), polyoxymethylene resin (POM), polybutylene terephthalate (PBT), polyvinyl acetate (PET), polyethylene naphthalate (PEN), polyvinyl chloride (PVC), polyvinyl fluoride (PVF), polyacrylate (PA), polymethyl methacrylate (PMMA), or polyurethane foam (PUR). The thickness of the adhesive layer 3 is 0.38 mm to 0.76 mm, and exemplarily 0.76 mm.

The position and the shape of an end portion 31 of the adhesive layer 3 opposite to the sealing member may not be particularly limited, but in order to ensure that the first glass sheet 1 and the second glass sheet 2 are firmly adhered by the adhesive layer 3, two sides of the adhesive layer 3 should respectively cover the inner side face 13 of the first glass sheet 1 and the inner side face 23 of the second glass sheet 2 as far as possible. In addition, in an embodiment of the present disclosure, in order to form a better stress state between the laminated glass and the sealing member, the end portion 31 of the adhesive layer 3 includes an end edge 32 (adhesive end face), which connects the end portion 11 of the first glass sheet 1 and the end portion 21 of the second glass sheet 2. Specifically, one end portion of the end edge 32 extends to the first end face 14, and the other end portion of the end edge 32 extends to a joint between the end portion 21 and the inner side face 23 of the second glass sheet 2.

As illustrated in FIG. 2, a tangent line F exists between the first end face 14 and the second end face 24, and in one or more embodiments, the tangent line F forms a defined boundary, so that the end edge 32 of the end portion 31 of the adhesive layer 3 does not extend beyond the defined boundary. This arrangement can prevent the sealing member from contacting the adhesive layer 3, so as to avoid the defects such as wear, increased resistance, noise generation, etc. that may be caused by the contact therebetween.

In one or more embodiments, the end edge 32 of the adhesive layer 3 may have a shape of an inclined line, or a concave profile recessed toward a central position of the adhesive layer 3. It is easy to understand that as long as the end edge 32 of the adhesive layer 3 does not extend beyond the above defined boundary, the protection scope of by the present disclosure would not be exceeded.

Specifically, setting the shape of the end edge 32 of the adhesive layer 3 as an inclined line can facilitate the grinding requirements of the industrial production automation, while achieving a good appearance compared with other embodiments of the present disclosure.

The materials of the first glass sheet 1 and the second glass sheet 2 may be various. According to one or more embodiments, the materials of the first glass sheet 1 and the second glass sheet 2 may be the same or different. In an exemplary embodiment, one or both of the first glass sheet 1 and the second glass sheet 2 may be made of glass (e.g., soda-lime glass, alkali aluminosilicate glass, alkali-containing borosilicate glass and/or alkali aluminoborosilicate glass) or glass ceramics. The examples of suitable glass ceramics include Li₂O-Al2O₃-SiO₂ system (i.e., LAS system) glass ceramics; MgO-Al₂O₃-SiO₂ system (MAS system) glass ceramics; and glass ceramics with a crystalline phase, and the crystalline phase may be any one or more selected from mullite, spinel, α-quartz, β-quartz solid solution, petalite, lithium disilicate, spodumene, nepheline and alumina. In addition, one or both of the first glass sheet 1 and the second glass sheet 2 may be subjected to chemical strengthening, thermal strengthening, mechanical strengthening or combinations thereof. In one or more embodiments, the first glass sheet 1 is not strengthened (the first glass sheet 1 is not strengthened by chemical strengthening, thermal strengthening or mechanical strengthening, but may include an annealed substrate), and the second glass sheet 2 is strengthened. In one or more particular embodiments, the first glass sheet 1 is subjected to thermal strengthening and the second glass sheet 2 is subjected to chemical strengthening. Specifically, the combination of various strengthening means can meet the strength requirements of the laminated glass under various loading conditions, such as a frameless window glass assembly.

In an embodiment, a surface compressed stress (CS) of glass or a glass-ceramic substrate subjected to chemical strengthening may be 300 MPa or more, such as 400 MPa or more, 450 MPa or more, 500 MPa or more, 550 MPa or more, 600 MPa or more, 650 MPa or more, 700 MPa or more, 750 MPa or more, or 800 MPa or more. In one or more embodiments, the surface CS of the glass or the glass-ceramic substrate subjected to strengthening is a maximum CS.

A depth of layer (DOL) of the glass or the glass-ceramic substrate subjected to chemical strengthening may be about 15 µm or more, 20 µm or more (e.g., 25 µm, 30 µm, 35 µm, 40 µm, 45 µm, 50 µm or more). In one or more embodiments, the glass or the glass-ceramic substrate subjected to strengthening may exhibit a maximum center tension (CT) value of 10 MPa or more, 20 MPa or more, 30 MPa or more, 40 MPa or more (e.g., 42 MPa, 45 MPa or 50 MPa or more) but less than 100 MPa (e.g., 95 MPa, 90 MPa, 85 MPa, 80 MPa, 75 MPa, 70 MPa, 65 MPa, 60 MPa, 55 MPa or less).

The chemical strengthening for the thin glass enables the glass sheet to maintain a high strength while being thin enough, which facilitates to reduce the overall weight of the laminated glass without compromising the performance, thereby allowing the user to use the vehicle more economically, and or increasing the endurance mileage of an electric vehicle.

In an embodiment, the present disclosure further provides a vehicle window glass made of laminated glass. The specific structure, the working principle and the advantageous effects of the laminated glass in this embodiment are the same as those of the laminated glass in Embodiment 1, which will not be repeated here.

In an embodiment, the present disclosure further provides a vehicle including the laminated glass described above. The specific structure, the working principle and the advantageous effects of the laminated glass in this embodiment are the same as those of the laminated glass in Embodiment 1, which will not be repeated here.

Those described above are just several embodiments of the present disclosure, and those skilled in the art can make various modifications or variations to the embodiments of the present disclosure according to the contents disclosed in the application document without departing from the spirit and scope of the present disclosure.

## Claims

1. A laminated glass, comprising a first glass sheet and a second glass sheet which are arranged in a stacked configuration, an adhesive layer disposed between the first glass sheet and the second glass sheet, the laminated glass having a sealing end portion which is capable of being fitted with a sealing member, the sealing end portion comprising a first end face located at an end portion of the first glass sheet and a second end face located at an end portion of the second glass sheet;
wherein the first end face extends outward relative to the second end face along an extension direction of the laminated glass to form an overlap difference, and the overlap difference is greater than 0.5 mm and less than 3 mm; the second end face comprises two arc-shaped end faces which are symmetrically disposed and each have an arc angle not exceed 90°.

2. The laminated glass according to claim 1, wherein
the first end face is a semicircular end face, and the two arc-shaped end faces of the second end face each have an arc angle of 90° and are connected to form a semicircular end face.

3. The laminated glass according to claim 1 or 2, wherein a tangent line exists between the first end face and the second end face, a vertical distance A between a tangent point on the tangent line of the first end face and a closest point on the second end face to the tangent point ranges from 0.4 mm to 2.4 mm, and a vertical distance B between an intersection point of the tangent line with an extension line of an outer side face of the second glass sheet and the tangent point ranges from 0.5 mm to 2.8 mm.

4. The laminated glass according to claim 3, wherein
the vertical distance A is in a range of 1.1 mm to 1.47 mm, and the vertical distance B is in a range of 1.29 mm to 1.72 mm.

5. The laminated glass according to claim 3, wherein
the vertical distance A is in a range of 1.6 mm to 2 mm, and the vertical distance B is in a range of 1. 9 mm to 2.32 mm.

6. The laminated glass according to claim 3, wherein
the tangent line intersects with the extension line to form an included angle ∠C, and the radius of the arc-shaped end face is R, and ∠C =2 × arctan(R/( R-(B-A))).

7. The laminated glass according to claim 6, wherein,
the included angle ranges from 110° to 140°.

8. The laminated glass according to claim 7, wherein,
the included angle ranges from 113.6° to 122.8°.

9. The laminated glass according to claim 7, wherein,
the included angle ranges from 130.9° to 134.6°.

10. The laminated glass according to claim 1, wherein,
the thickness of the second glass sheet is smaller than that of the first glass sheet, and
the first glass sheet is disposed toward a side of the laminated glass with a larger external load.

11. The laminated glass according to claim 10, wherein,
the thickness of the first glass sheet is greater than 2.8 mm, and the thickness of the second glass sheet is less than 1.4 mm.

12. The laminated glass according to claim 1, wherein,
a tangent line between the first end face and the second end face forms a defined boundary; and an end edge of the adhesive layer does not extend beyond the defined boundary.

13. A vehicle window glass, which is made of the laminated glass according to any one of claims 1 to 12.

14. A vehicle, comprising the laminated glass according to any one of claims 1 to 12.
